# EUROPEAN PATENT APPLICATION

(11) **EP 1 736 970 A1**
(43) Date of publication of application: **27.12.2006**
(21) Application number: 05730559.1
(22) Date of filing: 14.04.2005
(51) Int. Cl.: G11B 7/0045, G11B 7/125, G11B 7/24, G11B 23/40

(54) **INFORMATION PROCESSING DEVICE**

(30) Priority: 16.04.2004 JP 2004121559
(71) Applicant: MATSUSHITA ELECTRIC INDUSTRIAL CO., LTD., Kadoma-shi, Osaka 571-8501 (JP)
(72) Inventor: TAKAHASHI, Yuuichi, // (JP)
(74) Representative: Balsters, Robert
(86) International application number: PCT/JP2005/007266
(87) International publication number: WO 2005/101383

(57) **Abstract**

The present invention relates to an apparatus capable of optically recording information onto an information medium (1) by converging a light beam which is emitted from a first light source (6) and passes through a first beam-splitter (8) and a collimating lens (10) onto the information medium (1) using a convergence lens (12) and converging a light beam which is emitted from a second light source (7) and passes through a second beam-splitter (9) and a collimating lens (10) onto the information medium using a convergence lens (12). When visual information such as a title and an image relating to information recorded in the information layer (2) of the information medium (1) is recorded onto the visual information layer (5) of the information medium (1), the first light source (6) and the second light source (7) emit light simultaneously, thereby improving emission intensity. This enables changing the color of the visual information layer which is made by heat-sensitive recording materials, thereby improving a recording speed of the visual information.

## Description

### TECHNICAL FIELD

The present invention relates to an information processing apparatus capable of recording an information signal onto an information layer of an information medium or reproducing the information signal recorded on the information layer of the information medium, and further capable of recording visibly identifiable visual information.

### BACKGROUND ART

The technology for converting an information signal into a digital signal and recording the digital signal began with an optical disc known as CD-R, which has a recording layer having dye as the main component. The dye is formed on a transparent substrate having a thickness of 1.2 mm. Currently, optical discs having a greater recording capacity than the CD-R, known as DVD-R, DVD-RW, DVD-RAM and the like, are widely used. In these discs, transparent substrates each having a thickness of 0.6 mm are bonded together via a recording layer having a dye or phase change materials.

As the optical discs described above are widely used, it is required to apply visual information on the optical discs, so that users may easily identify the optical discs according to the contents recorded on the optical discs (e.g. title information regarding the contents recorded on the optical discs). In recent years, printers capable of recording information on the label of optical discs have been widely used. However, these require users to utilize a printer in addition to an optical disc apparatus, which results in an additional cost to users. Since printers are generally sold as a peripheral device for a computer, it is necessary to start up the computer, and set an optical disc in a printer in order to print on a label of the disc which has been recorded using an optical disc apparatus, such as a DVD recorder. For the reasons above, an optical disc apparatus capable of directly recording a label on an optical disc having a printable label surface is desired.

As documents in this field, for example, Reference 1 is known. Specifically, Reference 1 discloses obtaining visual information by detecting the presence/absence of ATIP information in an optical disc having a dye recording layer, a reflective layer, a protective layer, a heat-sensitive layer, and a protective layer laminated on a protective substrate; recognizing that the optical pickup is facing the heat-sensitive layer when the ATIP information is not detected; controlling the focus so that a light beam having a diameter greater than the diameter of the laser beam used to record information onto the dye recording layer irradiates the heat-sensitive layer; and irradiating the laser beam on the heat-sensitive layer with the optical pickup.
Reference 1: Japanese laid-open patent publication No. 2003-203348 (Paragraphs 0055-0061, Figures 1-3 and 13)

However, the technology disclosed in Reference 1 is directed to a single laser. Accordingly, there may be problems such as a lack of power (amount of light) of the light beam to be irradiated on the heat-sensitive layer to make the label information visible, or inability to stabilize the power of the light beam. In order to overcome the problems, it is necessary to increase the color density by extending the heating time per each color point. Extending the heating time means either lowering the linear velocity of the optical disc or repeatedly heating the color point. In other words, this is equivalent to extending the label recording time.

The purpose of the present invention is to overcome the conventional problems described above and to provide an information processing apparatus capable of recording visual information at a high speed.

### DISCLOSURE OF THE INVENTION

An information processing apparatus according to the present invention is provided for performing at least one of a recording operation and a reproduction operation for an information medium having an information layer. The information processing apparatus includes: a plurality of light sources; a convergence lens for converging light emitted from the plurality of light sources onto the information layer of the information medium; and a controlling means for controlling the plurality of light sources. The information medium further has a visual information layer capable of recording visually identifiable visual information. The visual information layer faces the information layer.

When the visual information is recorded onto the visual information layer, the controlling means may control the plurality of light sources such that the plurality of light sources emit light simultaneously, or the controlling means may control the plurality of light sources such that the plurality of light sources emit light alternately.

By simultaneously irradiating light from a plurality of light sources onto the visual information layer, the power fluctuations of light from each of the plurality of light sources may be reduced. A plurality of light spots by the convergence lens 12 exist on the visual information layer. This makes it possible to equivalently enlarge the diameter of the light beam irradiating on the visual information layer. As a result, it is possible to improve the recording speed of the visual information.

Further, by alternately irradiating light from a plurality of light sources onto the visual information layer, the power fluctuations of light from each of the plurality of light source may be reduced. A plurality of light spots by the convergence lens 12 exist on the visual information layer. This makes it possible to equivalently enlarge the diameter of the light beam irradiating on the visual information layer. By switching the plurality of light sources, it is possible to restrict the degradation of the plurality of light sources.

### BRIEF DESCRIPTION OF THE DRAWINGS

Figure 1 is a diagram showing an exemplary structure of an information processing apparatus according to embodiment 1 of the present invention.
Figure 2 is a block diagram of a circuit for driving light sources of the information processing apparatus shown in Figure 1.
Figure 3 is a diagram showing an exemplary structure of an information processing apparatus according to embodiment 2 of the present invention.
Figure 4 is a block diagram of a circuit for driving light sources of the information processing apparatus shown in Figure 3.
Figure 5A is a diagram showing an exemplary structure of an information medium adapted in embodiment 3 of the present invention.
Figure 5B is a diagram showing an exemplary structure of another information medium adapted in embodiment 3 of the present invention.
Figure 6 is a diagram showing an exemplary structure of an information processing apparatus according to embodiment 3 of the present invention.
Figure 7A is a diagram showing an example of an OPD of a light spot when the position of the second light source is changed in the information processing apparatus shown in Figure 6.
Figure 7B is a diagram showing an example of interference fringes.
Figure 8A is a diagram showing an example of an OPD of a light spot when the second light source is placed at a different position in the information processing apparatus shown in Figure 6.
Figure 8B is a diagram showing an example of interference fringes.
Figure 9 is an enlarged view of the relevant part of the information processing apparatus.

- 1, 29: Information medium
- 2, 31: Information layer
- 3, 4, 30: Substrate
- 5: Visual information layer
- 6: First light source
- 7: Second light source
- 8: First beam-splitter
- 9: Second beam-splitter
- 10: Collimating lens
- 11: Mirror
- 12: Convergence lens
- 13, 14: Power monitoring light detector
- 15, 26: Power control circuit
- 16, 33, 34, 36, 37: Light detector
- 17: First PC block
- 18: First current source
- 19: First electronic switch
- 20: First current amplifier
- 21: Second PC block
- 22: Second current source
- 23: Second electronic switch
- 24: Second current amplifier
- 25: Central control block
- 131, 141: Photodiode
- 132, 142: Current-to-voltage conversion amplifier
- 34, 35: Light source unit
- 38, 40: Diffraction element
- 39: Optical element

### BEST MODE FOR CARRYING OUT THE INVENTION

Hereinafter, the embodiments of the present invention will be described below with reference to the drawings.

### (Embodiment 1)

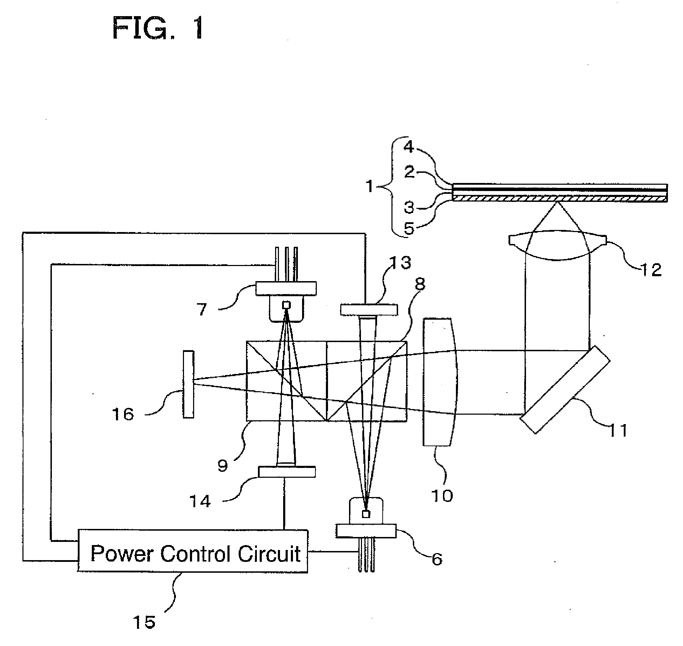

Figure 1 shows an exemplary structure of an information processing apparatus according to embodiment 1 of the present invention.

The information processing apparatus is configured to perform at least one of a recording operation and a reproduction operation for an information medium 1.

The information medium 1 has a structure in which a transparent substrate 3 and a transparent substrate 4 are bonded together via an information layer 2. A visual information layer 5 is provided on the transparent substrate 3. The information layer 2 is configured such that recording and/or reproduction (hereinafter, "recording/reproduction") of a desired information signal can be performed. The visual information layer 5 is configured such that visibly identifiable visual information can be recorded. Thus, the information medium 1 includes an information layer 2 and a visual information layer 5 which faces the information layer 2.

The information processing apparatus includes a first light source 6, a second light source 7, a first beam-splitter 8, a second beam-splitter 9, a collimating lens 10, a mirror 11, a convergence lens 12, power monitoring light detectors 13 and 14, a power control circuit 15 (hereinafter, "PC circuit"), and a light detector 16.

Figure 1 shows a case where visual information is recorded on the visual information layer 5 of the information medium 1. When the recording/reproduction of a desired information signal is performed on the information layer 2 of the information medium 1, the information medium 1 may be simply turned over.

Next, the function of each element shown in Figure 1 will be described below.

The first light source 6 emits a light beam. The light beam emitted from the first light source 6 is reflected by the reflection film of the first beam-splitter 8. Then, the reflected light is converted into a collimated light by the collimating lens 10. Then, the collimated light is directed to a direction of the optical axis of the convergence lens 12 by the mirror 11. As a result, a light spot is formed on the information medium 1 by the convergence lens 12.

The power for emitting light in the first light source 6 is determined by detecting a part of the light beam which transmits through the first beam-splitter 8 using the power monitoring light detector 13, and by feeding a detection signal back to the PC circuit 15 so as to apply a proper driving current to the first light source 6.

The reflected "light reflected by the information medium 1 enters the first beam-splitter 8 via the convergence lens 12, the mirror 11 and the collimating lens 10. Then, the reflected light transmits through the reflection film of the first beam-splitter 8 and is received by the light detector 16. The light detector 16 generates a detection signal (e.g. a focus error signal or a tracking error signal for controlling the convergence lens 12, or an information signal to be recorded on the information layer 2) based on the received reflected light.

The second light source 7 emits a light beam. The light beam emitted from the second light source 7 is reflected by the reflection film of the second beam-splitter 9. Then, the reflected light is converted into a collimated light by the collimating lens 10. Then, collimated light is directed to a direction of the optical axis of the convergence lens 12 by the mirror 11. As a result, a light spot is formed on the information medium 1 by the convergence lens 12.

The power for emitting light in the second light source 7 is determined by detecting a part of the light beam which transmits through the second beam-splitter 9 using the power monitoring light detector 14, and by feeding a detection signal back to the PC circuit 15 so as to apply a proper driving current to the second light source 7.

The reflected light reflected by the information medium 1 enters the second beam-splitter 9 via the convergence lens 12, the mirror 11 and the collimating lens 10. Then, the reflected light transmits through the reflection film of the second beam-splitter 9 and is received by the light detector 16. The light detector 16 generates a detection signal (e. g. a focus error signal or a tracking error signal for controlling the convergence lens 12, or an information signal to be recorded on the information layer 2) based on the received reflected light.

Visual information layer 5 of the information medium 1 contains so-called heat-sensitive color changing substance. The color of the substance is changed in accordance with heat generated by the light beam emitted from the first light source 6 and the light beam emitted from the second light source 7.

In general, in order to easily recognize visual information such as characters and images, a high contrast between the visual information and the visual information layer is required. For example, when the visual information is recorded on the visual information layer by changing the color of the heat-sensitive color changing substance into black, the visual information layer having a color such as white or a light color close to white is used.

The light to heat conversion efficiency for the information layer 2 is high. This is because color substance which facilitates the absorption of the light beam is used for the information layer 2 without considering the visibility of the information layer 2. On the other hand, the light to heat conversion efficiency for the visual information layer 5 is low. This is because substance having a color such as white or a light color close to white is used for the visual information layer 5, as described above.

According to the present embodiment, the light beam emitted from the first light source 6 is used to perform recording/reproduction of a desired information signal on the information layer 2. The second light source 7 is used as a supplemental light source which assists the first light source 6 for the purpose of recording the visual information on the visual information layer 5, since the light to heat conversion efficiency for the visual information layer 5 is low. For example, the oscillation wavelengths, the power for emitting light and the NAs for the convergence lens 12 may be the same or different between the first light source 6 and the second light source 7. The second light source 7 in the present embodiment is used as a supplemental light source for the purpose of reducing a recording time required to obtain a maximum optical density for usual visuals (e.g. 1. 0 or more at the Macbeth reflection density scale). This is because the color changing efficiency of the heat-sensitive color changing substance for the visual information layer 5 is low when the first light source 6 is solely used.

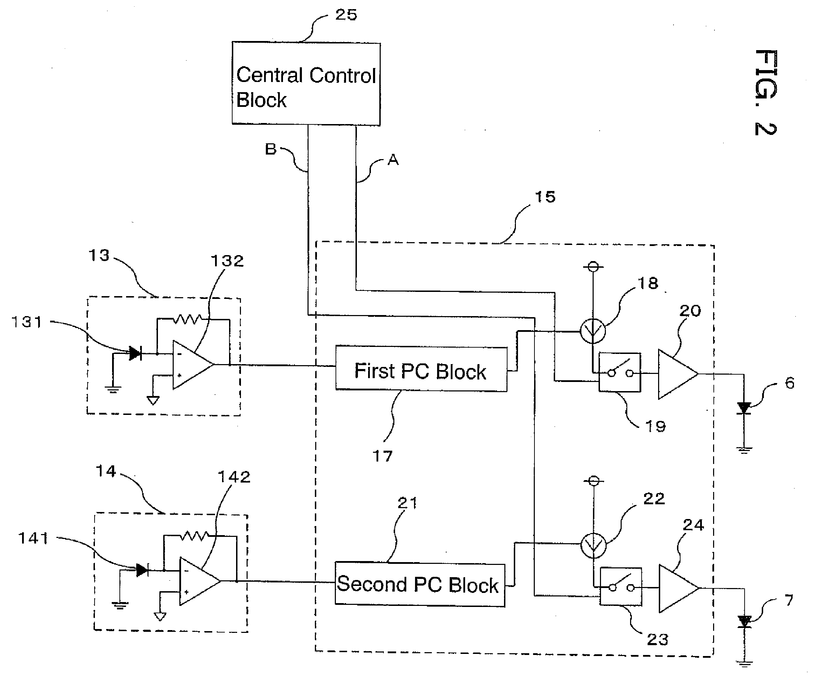

Figure 2 shows a general structure of a circuit for driving the light sources in the present embodiment.

In Figure 2, reference numeral 17 denotes a first power control (PC) block, reference numeral 18 denotes a first current source, reference numeral 19 denotes a first electronic switch , reference numeral 20 denotes a first current amplifier, reference numeral 21 denotes a second power control (PC) block, reference numeral 22 denotes a second current source, reference numeral 23 denotes a second electronic switch, reference numeral 24 denotes a second current amplifier, reference numeral 25 denotes a central control block, reference numeral 131 denotes a photodiode within the light detector 13, reference numeral 132 denotes a current-to-voltage conversion amplifier within the light detector 13, reference numeral 141 denotes a photodiode within the light detector 14, and reference numeral 142 denotes a current-to-voltage conversion amplifier within the light detector 14.

When recording/reproduction of an information signal is performed on the information layer 2, the first light source 6 is driven by controlling an amount of the current flowing from the first current source 18 using the first PC block 17, and by turning on the first electronic switch 19 according to command A from the central control block 25 so as to allow the current flowing into the first light source 6 via the first current amplifier 20.

Apart of the light emitted from the first light source 6 enters the photodiode 131. The current flowing in accordance with an amount of the incident light is converted into a voltage by the current-to-voltage conversion amplifier 132. The voltage is input to the first PC block 17. Thus, the control process is fed back to the power control of the first light source 6.

When the visual information is recorded on the visual information layer 5, the second light source 7 is driven in addition to the first light source 6. The second light source 7 is driven by controlling an amount of the current flowing from the second current source 22 using the second PC block 21, and by turning on/off the second electronic switch 23 according to command B from the central control block 25 so as to allow the current flowing into the second light source 7 via the second current amplifier 24.

A part of the light emitted from the second light source 7 enters the photodiode 141. The current flowing in accordance with an amount of the incident light is converted into a voltage by the current -to -voltage convers ion amplifier 142. The voltage is input to the second PC block 21. Thus, the control process is fed back to the power control of the second light source 7.

Leuco dye having a chemical structure shown in (Chemical structure 1), which is used as a heat-sensitive color changing material, is mixed to a developer having a chemical structure shown in (Chemical structure 2) at a molar ratio of 1:3. Then, a dispersedheat- sensitive paint in which the average diameter of the particles is made to be approximately 2µm is applied to the substrate 3 of the information medium 1 by a thickness of approximately 7µm, so as to form the visual information layer 5 (hereinafter, this visual information layer is referred to as a "standard visual information layer"). In order to record image information onto the standard visual information layer, the information medium 1 is placed such that the standard visual information layer is located at the same side as the convergence lens 12, as shown in Figure 1. Then, an image is recorded on the visual information layer 5 at a resolution of 1200 dpi (hereinafter, this resolution is referred to as a "resolution specification"), by simultaneously emitting light from each of the first light source 6 and the second light source 7 light at a power of 30mW for emitting light (hereinafter, this condition for the power for emitting light is referred to as a "power condition 1"), without performing any focus servo of the convergence lens 12 (hereinafter, this condition is referred to as a "visual recording condition 1"). The maximum optical reflection density of the image recorded on the visual information layer 5 is 1.2 on a Macbeth densitometer (hereinafter, this condition for recording density is referred to as a "recording specification") and the recording time is 15 minutes. In comparison, when the power for emitting light under power condition 1 is applied solely to the first light source 6, the recording time of 45 minutes is required to obtain an image having the density corresponding to the recording specification on the standard visual information layer under visual recording condition 1.

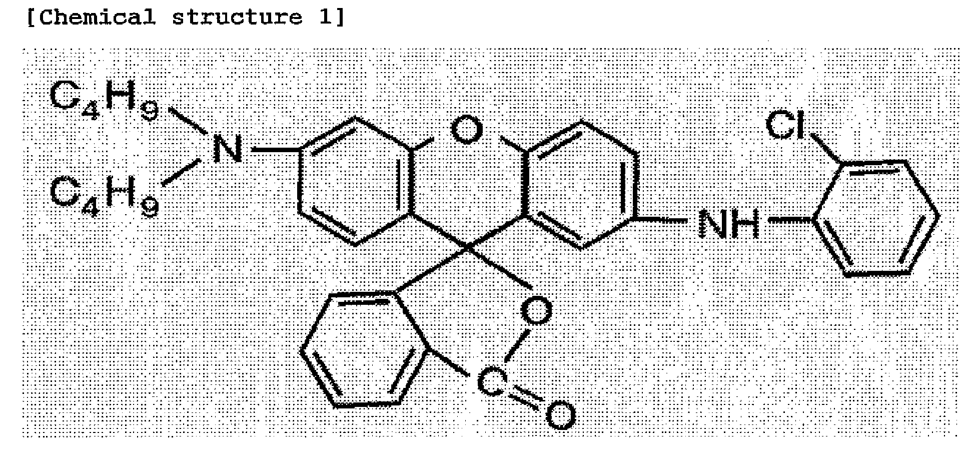

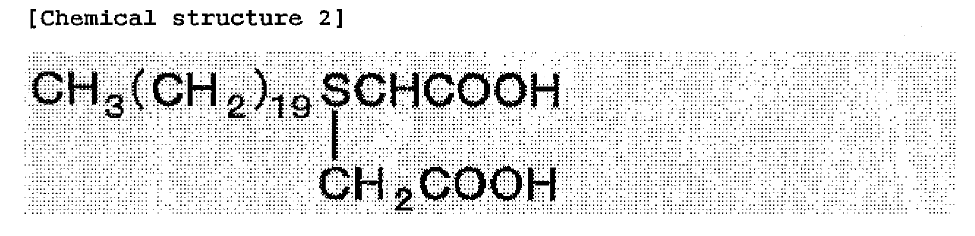

In the present embodiment, it is described a case where the first light source 6 and the second light source 7 emit light simultaneously. In this case, during recording visual information, it is required that the first light source 6 and the second light source 7 emit light almost continuously. This tends to accelerate degradation of the first light source 6 and the second light source 7. In particular, there is a risk that the degradation of the first light source 6 is accelerated since the first light source 6 is used to perform recording/reproduction of the information signal on the information layer 4. By adopting a structure in which the first light source 6 and the second light source 7 emit light alternately, it is possible to restrict the degradation of the light sources (in particular, the first light source 6). Further, it is possible to simplify a structure of the circuit for driving the light sources and/or the power monitoring light detectors.

### (Embodiment 2)

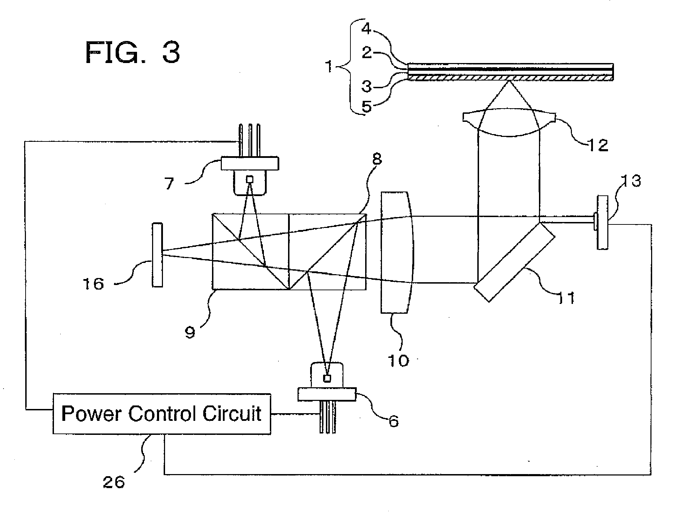

Figure 3 shows an exemplary structure of an information processing apparatus according to embodiment 2 of the present invention.

In the present embodiment, an exemplary structure in which the first light source 6 and the second light source 7 emit light alternately will be described.

The function of each element shown in Figure 3 will be described below.

The first light source 6 emits a light beam. The light beam emitted from the first light source 6 is reflected by the reflection film of the first beam-splitter 8. The reflected light is converted into a collimated light by the collimating lens 10. The collimated light is directed to a direction of the optical axis of the convergence lens 12 by the mirror 11. As a result, a light spot is formed on information medium 1 by the convergence lens 12.

The power for emitting light in the first light source 6 is determined by detecting apart of the light beam collimated by the collimating lens 10 using the power monitoring light detector 13, and by feeding a detection signal back to the PC circuit 26 so as to apply a proper driving current to the first light source 6.

The reflected light reflected by the information medium 1 enters the first beam-splitter 8 via the convergence lens 12, the mirror 11 and the collimating lens 10. Then, the reflected light transmits through the reflection film of the first beam-splitter 8 and is received by the light detector 16. The light detector 16 generates a detection signal (e.g. a focus error signal or a tracking error signal for controlling the convergence lens 12, or an information signal to be recorded on the information layer 2) based on the received reflected light.

The second light source 7 emits a light beam. The light beam emitted from the second light source 7 is reflected by the reflection film of the second beam-splitter 9. The reflected light is converted into a collimated light by the collimating lens 10. The collimated light is directed to a direction of the optical axis of the convergence lens 12 by the mirror 11. As a result, a light spot is formed on the information medium 1 by the convergence lens 12.

The power for emitting light in the second light source 7 is determined by detecting a part of the light beam collimated by the collimating lens 10 using the power monitoring light detector 13, and by feeding a detection signal back to the PC circuit 26 so as to apply a proper driving current to the second light source 7.

The reflected light reflected by the information medium 1 enters the second beam-splitter 9 via the convergence lens 12, the mirror 11 and the collimating lens 10. Then, the reflected light transmits through the reflection film of the second beam-splitter 9 and is received by the light detector 16. The light detector 16 generates a detection signal (e.g. a focus error signal or a tracking error signal for controlling the convergence lens 12, or an information signal to be recorded on the information layer 2) based on the received reflected light.

Figure 3 shows a case where visual information is recorded on the visual information layer 5 of the Information medium 1. When the recording/reproduction of a desired information signal is performed on the information layer 2 of the information medium 1, the information medium 1 may be simply turned over.

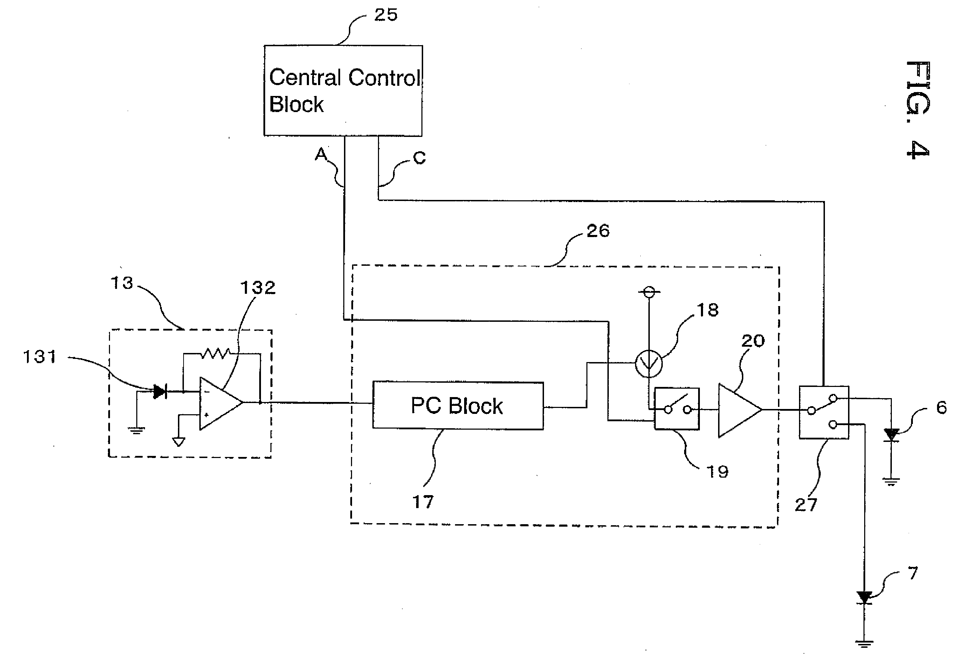

Figure 4 shows a general structure of a circuit for driving the light sources in the present embodiment.

In Figure 4, reference numeral 17 denotes a first power control (PC) block, reference numeral 18 denotes a current source, reference numerals 19 and 27 each denote an electronic switch, reference numeral 20 denotes a current amplifier, reference numeral 25 denotes a central control block, reference numeral 131 denotes a photodiode within the light detector 13, and reference numeral 132 denotes a current-to-voltage conversion amplifier within the light detector 13.

When recording/reproduction of an information signal is performed on the information layer 2, the first light source 6 is driven by controlling an amount of the current flowing from the current source 18 using the PC block 17, and by turning on the electronic switch 19 according to command A from the central control block 25 so as to allow the current flowing into the first light source 6 via the current amplifier 20. At this time, the electronic switch 27 connects the current output of the current amplifier 20 to the first light source 6 according to command C from the central control block 25.

A part of the light emitted from the first light source 6 enters the photodiode 131. The current flowing in accordance with an amount of the incident light is converted into a voltage by the current-to-voltage conversion amplifier 132. The voltage is input to the PC block 17. Thus, the control process is fed back to the power control of the first light source 6.

When the second light source 7 is driven, the electronic switch 27 connects the current output of the current amplifier 20 to the second light source 7 according to command C from the central control block 25.

A part of the light emitted from the second light source 7 enters the photodiode 131. The current flowing in accordance with an amount of the incident light is converted into a voltage by the current-to-voltage conversion amplifier 132. The voltage is input to the PC block 17. Thus, the control process is fed back to the power control of the second light source 7.

According to the structure described above, it is possible to simplify the apparatus and reduce its cost compared to the circuit of embodiment 1, by reducing the number of the power monitoring light detector into one and reducing the number of the current source and the current amplifier in the circuit for driving the light sources.

The switching time for alternating the first light source 6 and the second light source 7 can be set in an arbitrary manner. For example, the switching time can be set to three times of clock cycle T of a clock signal, where the clock signal is used as a reference signal. When the first light source 6 and the second light source 7 are driven alternately at a switching time which is equal to five times of the clock cycle T (hereinafter, this condition is referred to as a "switching condition 1" ) under the visual recording condition 1 and the power condition 1 described above in order to record visual information on the standard visual information layer, the recording time of 18 minutes is required to obtain an image having the density corresponding to the recording specification on the standard visual information layer.

In the all embodiments described above, a case where the oscillation wavelength of the first light source 6 is the same as the oscillation wavelength of the second light source 7 is described. However, these oscillation wavelengths are not necessarily the same, when the recording sensitivity of the visual information layer 5 depends on the wavelength. For example, it is possible that the oscillation wavelength of the first light source 6 is set to a wavelength suitable for the information layer 2 and the oscillation wavelength of the second light source 7 is set to a wavelength suitable for the visible information layer 5. In this case, it is needless to say that the recording speed at which visual information is recorded on the visual information layer 5 can be improved by switching the first light source 6 and the second light source 7 simultaneously or alternately, rather than driving the second light source 7 alone.

A distance between the convergence lens 12 and the information layer 2 (hereinafter, a "first distance") is set to a distance optimal to record an information signal on the information layer 2. Therefore, in general, a distance between the convergence lens 12 and the visual information layer 5 (hereinafter, a "second distance"), which is set to a distance optimal to converge light into the visual information layer 5, does not coincide with the first distance. For this reason, it is desired to secure a movable range of the convergence lens 12 so that the convergence lens 12 can move to positions corresponding to the first distance and the second distance. However, this requirement regresses against downsizing/thinning of the information processing apparatus.

In general, the convergence lens 12 is configured to obtain optimal convergence performance when an information signal is recordedon the information layer 2. For this reason, when the thickness of the substrate through which light reaches the information layer 2 is different from the thickness of the substrate through which light reaches the visual information layer 5, spherical aberration occurs in the light spot formed by converging light on the visual information layer 5. This degrades the convergence performance of the convergence lens 12. As a result, when visual information is recorded on the visual information layer 5, a higher energy is required compared to a case where an information signal is recorded on the information layer 2. However, when the convergence lens 12 cannot be placed at a position corresponding to the second distance described above, it is impossible to obtain a converged light spot of the highest heat collection efficiency within the visual information layer 5. Therefore, the converged light spot of the first light source 6 corresponding to sending/receiving of the information signal on at least the information layer 2 is in a defocused statewith respect to the visual information layer 5. This reduces the light to heat conversion efficiency. However, even if it is in the defocused state, the recording density can be improved by applying heat sufficient to change color of the heat-sensitive color changing substance in the visual information layer 5, since the recording area is enlarged by the light spot in the defocused state. Therefore, it is not required to obtain a converged light spot on the visual information layer 5 with respect to each of the first light source 6 and the second light source 7.

### (Embodiment 3)

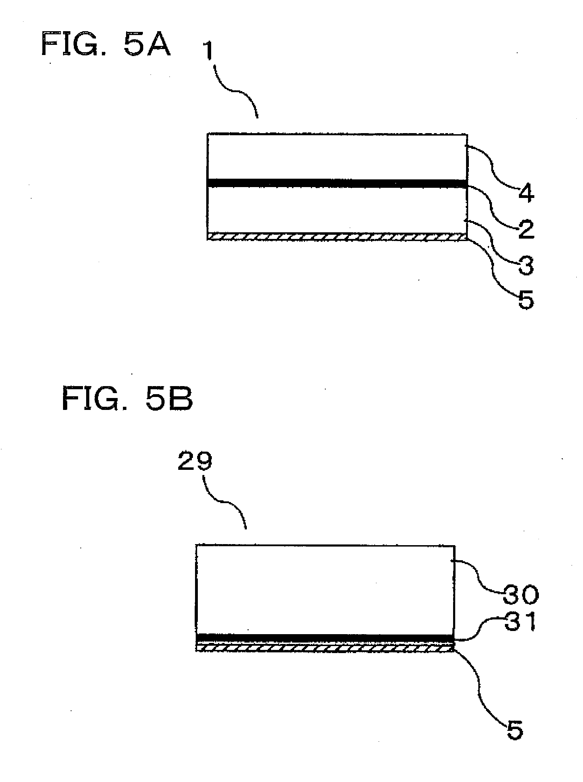

Next, an information processing apparatus according to embodiment 3 of the present invention will be described. The information processing apparatus according to the present embodiment has a structure capable of performing recording/reproduction of information on the information medium 1 shown in Figure 5A and the information medium 29 shown in Figure 5B, as well as recording visual information on the visual information layer.

The information medium 1 shown in Figure 5A is a so-called DVD type medium. In the information medium 1, each of the substrates 3 and 4 has a thickness of 0.6 mm. The substrates 3 and 4 are bonded via the information layer 2. The visual information layer 5 is provided on one of the substrates (e.g. on the substrates 3 as shown in Figure 5A). The information medium 29 shown in Figure 5B is a so-called CD type medium. In the information medium 29, the information layer 31 is formed on the substrate 30 having a thickness of 1.2 mm and the visual information layer 5 is laminated over the information layer 31.

The material of the information layer 2 of the information medium 1 and the material of the information layer 31 of the information medium 29 may be material of the same system (i.e. information layers essentially based on organic dye, etc) or may be material of different systems (i.e. one is an information layer having organic dye as an endmaterial, and the other is an information layer containing chalcogenidic chemical compounds as a main component).

The thickness of the substrate for the information layer 2 in the information medium 1 is different from the thickness of the substrate for the information layer 31 in the information medium 29. Accordingly, in order to obtain a favorable convergence performance required to record an information signal on both information medium 1 and information medium 29 using the same condensing lens 12, a correction of spherical aberration is required. Various techniques are proposed and disclosed for obtaining a favorable convergence performance for the substrates having different thickness using the same convergence lens. Herein, a case is described in which a method is used for correcting spherical aberration. In this case, one of the optical systems is a finite system.

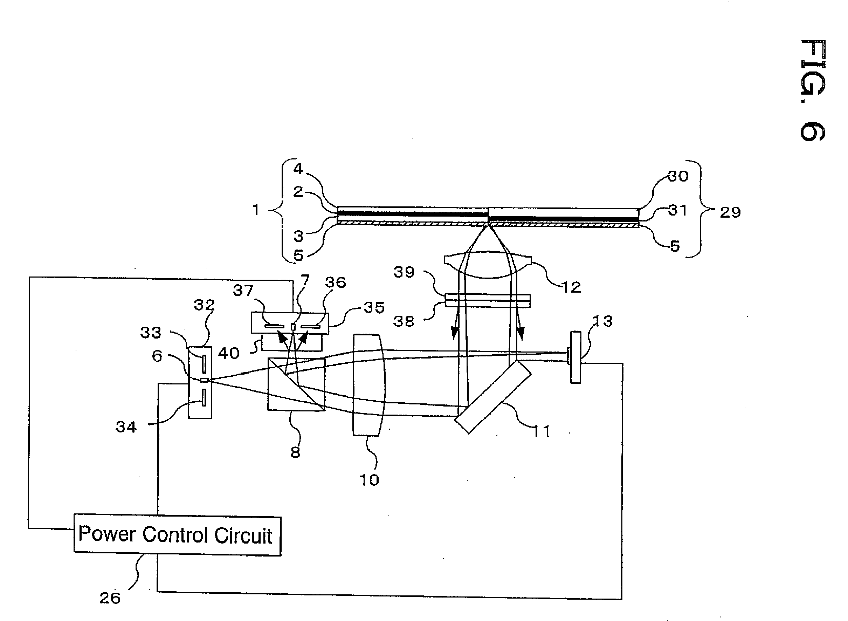

Figure 6 shows an exemplary structure of an information processing apparatus according to embodiment 3 of the present invention.

The function of each element shown in Figure 6 will be described below.

Reference numerals 32 and 35 denote light source units. Each of the light source units is configured to include a light source and a light detector within the same package.

The first light source 6 emits a light beam. The light beam emitted from the first light source 6 transmits through the first beam-splitter 8. Then, the transmitted light is converted into a collimated light by the collimating lens 10. Then, the collimated light is directed to a direction of the optical axis of the convergence lens 12 by the mirror 11. As a result, a light spot is formed on the information medium 1 by the convergence lens 12.

The power for emitting light in the first light source 6 is determined by detecting apart of the light beam collimated by the collimating lens 10 using the power monitoring light detector 13, and by feeding a detection signal back to the PC circuit 26 so as to apply a proper driving current to first light source 6.

The reflected light reflected by the information medium 1 enters the diffraction element 38 via the convergence lens 12, and is diffracted by the diffraction element 38. The diffracted light (not shown) enters the beam-splitter 8 via the mirror 11 and the collimating lens 10, transmits through the beam-splitter 8, and is received by the light detectors 33 and 34 provided adjacent to the first light source 6. By detecting the incident light in the light detectors 33 and 34, a focus error signal or a tracking error signal for controlling the convergence lens 12, or an information signal to be recorded on the information layer 2 are detected.

The second light source 7 emits a light beam. The light beam emitted from the second light source 7 is reflected by the reflection film of the beam-splitter 8, and is converted into a light beam in a low divergence state (not a collimated light) by the collimating lens 10 which restricts a divergence degree of the light beam, is directed to a direction of the optical axis of the convergence lens 12 by the mirror 11. As a result, a light spot is formed on the information medium 29 by the convergence lens 12.

The power for emitting light in the second light source 7 is determined by detecting a part of the light beam which transmits through the collimating lens 10 using the powermonitoring light detector 13, and by feeding a detection signal back to the PC circuit 26 so as to apply a proper driving current to second light source 7.

The reflected light reflected by the information medium 29 enters the beam-splitter 8 via the convergence lens 12, the mirror 11 and the collimating lens 10. Then, the reflected light is reflected by the reflection film of the beam-splitter 8, is diffracted by the diffraction element 40, and is received by the light detectors 36 and 37. By detecting the incident light in the light detectors 36 and 37, a focus error signal or a tracking error signal for controlling the convergence lens 12, or an information signal to be recorded on the information layer 31 are detected.

Figure 6 shows a case where visual information is recorded on the visual information layer 5 of the information medium 1 and the information medium 29. When the recording/reproduction of a desired information signal is performed on the information layer 2 of the information medium 1, the information medium 1 and information medium 29 may be simply turned over.

Herein, the convergence lens 12 is configured such that an aberration for the converged light on the information layer 2 of the information medium 1 becomes almost zero when the collimated light enters the convergence lens 12. In other words, the convergence lens 12 has a structure in which the highest convergence performance is obtained at a light spot formed by converging light via the substrate having a thickness of 0.6 mm when the collimated light enters the convergence lens 12. In this example, the numerical aperture NA of the convergence lens 12 is set to 0.63.

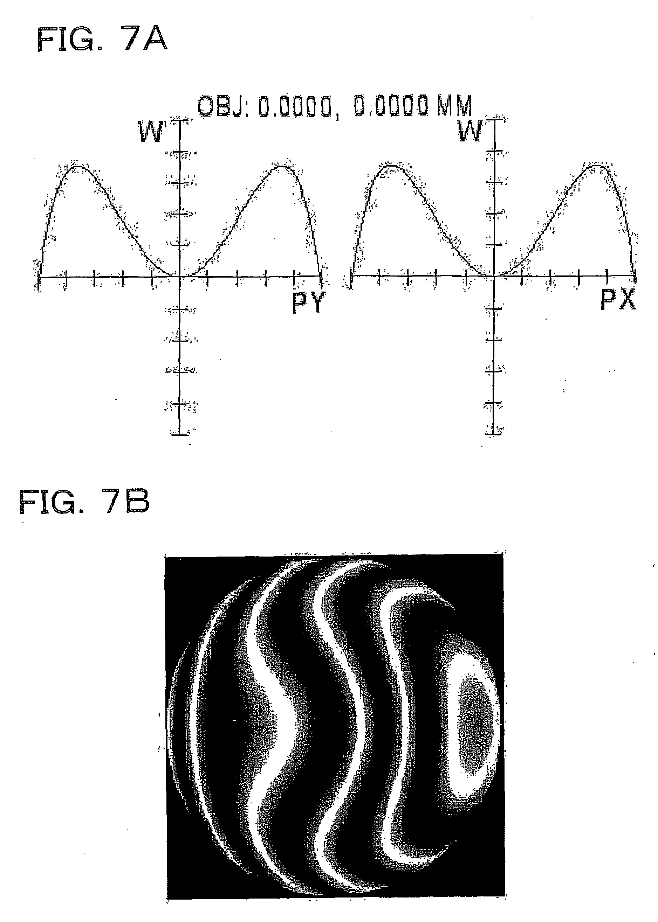

On the other hand, when the collimated light enters the convergence lens 12 and the collimated light is converged onto the information layer 31 of the information medium 29 by the convergence lens 12, a third-order spherical aberration of 222 mλ is generated. In this state, the Optical Path Difference (hereinafter, "OPD") and interference fringes of the converged light spot are shown in Figures 7A and 7B. The vertical axis of the OPD is in a range of ±1 λ.

In the example, the NA of the convergence lens 12 is set to 0.50, the focal distance *fo* is set to 2.8, the focal distance *fc* of the collimating lens 10 is set to 18.3, and the distance between the second light source 7 and the collimating lens 10 is about 17 mm.

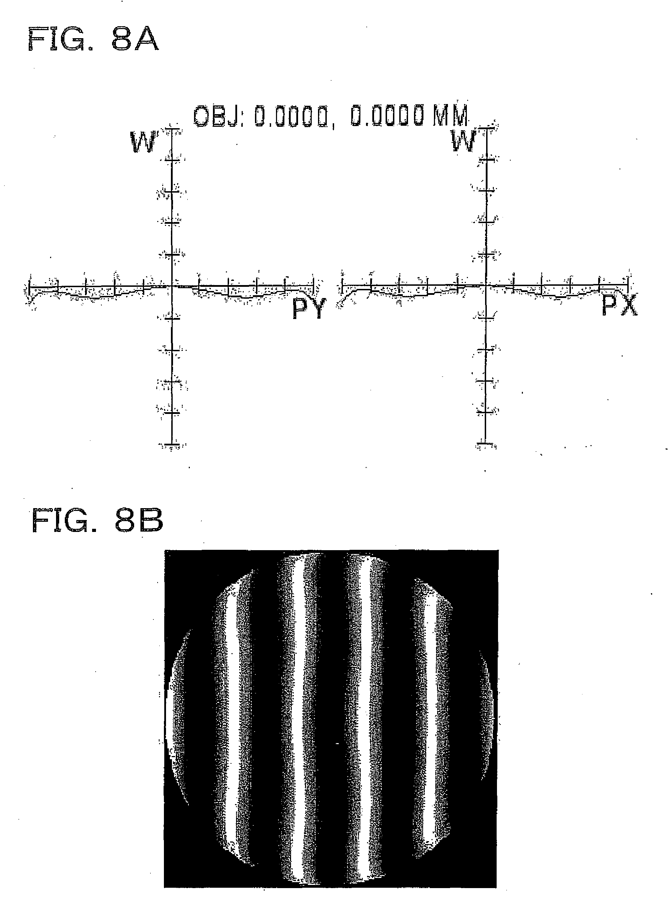

From this state, by bringing the second light source 7 close to the collimating lens 10 as shown in Figure 6 so that the distance between the second light source 7 and the collimating lens 10 becomes about 11 mm, it is possible to make the third-order spherical aberration generated due to the converged light on the information layer 31 of the information medium 29 to be almost zero. In this state, the OPD and interference fringes of the converged light spot are shown in Figures 8A and 8B.

By adopting the structure described above, the light beam emitted the second light source 7 enters the convergence lens 12 in the low divergence state. As a result, a distance D1 between the convergence lens 12 and the information medium 1, at which the light intensity of the center of the light spot formed by converging light emitted from the first light source 6 onto the visual information layer 5 of the information medium 1 becomes maximum, is different from a distance D2 between the convergence lens 12 and the information medium 29, at which the light intensity of the center of the light spot formed by converging light emitted from the second light source 7 onto the visual information layer 5 of the information medium 29 becomes maximum. In this example, D1 = 1.840 mm and D2 = 2.0001 mm.

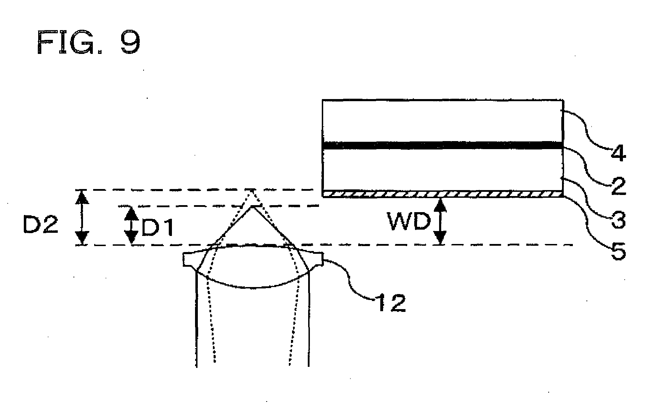

This difference in the distance D1 and the distance D2 is due to different angles of the respective light beams output from the convergence lens 12 as shown in Figure 9, since the collimated degree of the light beams incident on the convergence lens 12 are different from each other. In Figure 9, a light path for the light beam from the first light source 6 through the convergence lens 12 is indicated by a solid line and a light path for the light beam from the second light source 7 through the convergence lens 12 is indicated by a broken line.

Herein, D1 denotes a distance between a surface of the convergence lens 12 facing the visual information layer 5 and the converged light spot of the light beam from the first light source 6, where the light intensity of the center of the light beam from the first light source 6 becomes the maximum; D2 denotes a distance between a surface of the convergence lens 12 facing the visual information layer 5 and the converged light spot of the light beam from the second light source 7, where the light intensity of the center of the light beam from the second light source 7 becomes maximum; and WD denotes a distance between the convergence lens 12 and the visual information layer 5 (in general, this distance is referred to as an "operating distance"). By arranging the convergence lens 12 with respect to the information medium 1 to satisfy a relationship of D1 ≤ WD < D2, it is possible to increase the energy concentration from each one of the first light source 6 and the second light source 7, and the recording of visual information on the visual information layer 5 becomes optimal. In Figure 9, the relationship of D1 ≤ WD < D2 is described with respect to the information medium 1. However, this relationship can be also applied to the information medium 29. Each of the information mediums 1 and 29 suffers from a surface deflection. Therefore, it is preferable to arrange the convergence lens 12 to satisfy a relationship of D1 < WD < D2 in view of the surface deflection.

An experiment was made using the information processing apparatus having a structure in which the first light source 6 and the second light source 7 emit light simultaneously. In the experiment, an image of the recording specification was recorded on the standard visual information layer under visual information condition 1 and at the resolution specification under power condition 1. D1 was set to 1.840 mm and D2 was set to 2 .001mm. When the convergence lens 12 is arranged to satisfy a relationship of D1 ≤ WD < D2, the recording time was from 11 minutes to 16 minutes. When the convergence lens 12 is arranged to satisfy a relationship of D1 < WD < D2, the recording time was from 9 minutes to 13 minutes. The power for emitting light in the first light source 6 and the second light source 7 was at 30 mW.

In the present embodiment, a numerical aperture NA1 of the convergence lens 12 used to perform recording/reproduction of an information signal on the information layer 2 of the information medium 1 is set to 0.63, and a numerical aperture NA2 of the convergence lens 12 used to perform recording/reproduction of an information signal on the information layer 31 of the information medium 29 is set to 0.50. Different numerical apertures are selectively used for different light sources. Such selective use of the numerical apertures can be realized and commonly used, for example, by using the first light source 6 as a light source for DVDs with its central wavelength of 660 nm, by using the second light source 7 as a light source for CDs with its central wavelength of 790 nm, and by providing an aperture filter in the optical element 39 shown in Figure 6. The aperture filter can be implemented by an optical film or a diffraction lattice having wavelength selectivity.

As described above, it is assumed that a numerical aperture NA1 of the convergence lens 12 used to perform recording/reproduction of an information signal on the information layer 2 of the information medium 1 is set to 0.63, a numerical aperture NA2 of the convergence lens 12 used to perform recording/reproduction on the information layer 31 of the information medium 29 is set to 0.50, the power for emitting light in the first light source 6 is set to 50 mW, and the power for emitting light in the second light source 7 is set to 30 mW. In this case, in order to record an image of the recording specification on the standard visual information layer under visual information condition 1 and at the resolution specification, the recording time is 10 minutes. A first case where the light from the first light source 6 is converged onto the standard information medium (i.e. a case where NA = 0.63) requires a higher NA than a second case where the light from the second light source 7 is converged onto the standard information layer (i.e. a case where NA = 0.50). Accordingly, the resultant third-order spherical aberration for the first case is larger than that for the second case. In the present embodiment, the resultant third-order spherical aberration for the first case is 730 mλ, whereas the resultant third-order spherical aberration for the second case is 396 mλ.

As a result, even if the same amount of power is applied to the standard visual information layer from the first light source 6 and the second light source 7, the power of the light from the first light source 6, which contributes the actual recording of the visual information, is lower than the power of the light from the second light source 7, which contributes the actual recording of the visual information. This is due to the difference in spherical aberration.

When the radiation angle of the light beam from the first light source 6 is equivalent to the radiation angle of the light beam from the second light source 7, an amount of the light which transmits through the convergence lens 12 from the first light source 6 is larger than an amount of the light which transmits through the convergence lens 12 from the second light source 7. This is due to the difference in numerical aperture of the convergence lens 12. Then, the light is converged onto the standard information layer. Due to even greater influence from the spherical aberration, the power for emitting light in the first light source 6 is further increased.

In this manner, by setting the power for emitting light in the first light source 6 at a higher level compared to the power for emitting light in the second light source 7, the power of the two converged light spots on the standard visual information layer can be substantially the same. As a result, it is possible to make the energy distribution between the two light spots to be quasi-symmetric, thereby obtaining the optimal recording performance of visual information.

In most apparatuses, it is often to use a light source having a shorter wavelength with a higher NA. In general, a larger spherical aberration occurs when the visual information is recorded using the light source having a shorter wavelength. Therefore, the exemplary case described above corresponds to a case where a light source having a shorter wavelength emits light with a higher power than a light source having a longer wavelength (for example, as for CDs, the wavelength is about 790 nm and the NA is about 0.50; as for DVDs, the wavelength is about 660 nm and the NA is about 0.63; and as for BDs, the wavelength is about 405 nm and the NA is about 0.85).

In the information processing apparatus capable of performing recording/reproduction with respect to the information mediums 1 and 29, by switching the first light source 6 and the second light source 7 under a certain condition (e.g. switching condition 1), it is possible to restrict the degradation of the first light source 6 and the second light source 7, as well as simplifying the apparatus and reducing the cost, although the recording time is a little bit longer. This is similar to a case where the first light source 6 and the second light source 7 emit light simultaneously.

Further, in any of the embodiments described above, when the visual information is characters and the like, for example, the recording time can be reduced by reducing the resolution. Even when the resolution is reduced, an effect of improving the recording speed according to the present invention can be obtained similarly.

In general, a user's desire in recording visual information on the visual information layer is capability of recording information relating to the contents recorded in the information medium (e.g. titles, characteristic images and the like), and capability of visually identifying the information recorded in the information medium even in a state where the information medium is taken out of the case. There are various types of information mediums. Awrite-once type information medium is capable of recording information only once and is called CD-R, DVD-R or DVD+R. A rewritable type information medium is called CD-RW, DVD+RW, DVD-RW or DVD-RAM.

According to the write-once type information medium, it is possible to additionally record information up to the capacity of the information medium. Therefore, it is desirable to additionally record visual information on the visual information layer. In order to meet this desire, a recording area for describing a recording history on the visual information layer is provided in an area of the information layer. The area of the information layer is located, for example, in an inner peripheral portion of the back surface of the information medium. In the recording area, an identifier for identifying the presence/absence of the visual information layer, an identifier for indicating a starting location at which the recording of the visual information is started, an identifier for indicating the location of the recorded visual information, the recording conditions for recording the visual information and the like are described using light beam from the first light source and/or the second light source of the information processing apparatus. By configuring the information processing apparatus according to the present invention to recognize a starting location at which the additional recording of the visual information is started, it is possible to additionally record the visual information and to improve the recording accuracy.

In the rewritable type information medium, it is preferable to rewrite the visual information each time the information recorded on the information layer is rewritten. For example, by combining the leuco dye in (Chemical structure 1) and the long-chain developer in (Chemical structure 2), it is possible to record the visual information on the visual information layer by changing a color of the visual information layer into black. The change of the color of the visual information layer is made, for example, by raising a temperature of the visual information layer to a high temperature (e.g. 150°C) and then rapidly falling down the temperature of the visual information layer to a room temperature. It is further possible to erase the recorded black portion by maintaining the temperature of the visual information layer at an intermediate temperature (e.g. 70 °C). This characteristic can be applied to the information processing apparatus of the present invention.

Specifically, when the visual information is recorded on the visual information layer, the first light source and the second light source emit light simultaneously or alternately as described above. When the recorded visual information is erased from the visual information layer, only one of the first light source and the second light source emits light with a lower power for emitting light or under a condition such as a condition of a higher linear velocity.

For example, when the NA for the first light source is different from the NA for the second light source, it is possible to erase the visual information recorded in any of the embodiments described above, by emitting light from only a light source corresponding to a higher NA (e.g. the first light source in the embodiment above) for a period of 21 minutes with a power for emitting light of 10 mW.

For example, when the oscillation wavelength for the first light source is different from the oscillation wavelength for the second light source, it is possible to erase it by emitting light from only a light source corresponding to a longer wavelength for a period of 25 minutes with the power for emitting light described above.

As described above, the present invention is exemplified by the use of its preferred embodiments. However, the present invention should not be interpreted solely based on the embodiments described above. It is understood that the scope of the present invention should be interpreted solely based on the claims. It is also understood that those skilled in the art can implement equivalent scope of technology, based on the description of the present invention and common knowledge from the description of the detailed preferred embodiments of the present invention. Furthermore, it is understood that any patent, any patent application and any references cited in the present specification should be incorporated by reference in the present specification in the same manner as the contents are specifically described therein.

### INDUSTRIAL APPLICABILITY

The information processing apparatus of the present invention is capable of recording visually identifiable visual information representing the contents of the information recorded in the information layer of the information medium or an image and the like which enables visual identification of the information medium, on the visual information layer of the information medium, by using a plurality of light sources as necessary.

## Claims

1. An information processing apparatus for performing at least one of a recording operation and a reproduction operation for an information medium having an information layer, the information processing apparatus comprising:
a plurality of light sources;
a convergence lens for converging light emitted from the plurality of light sources onto the information layer of the information medium; and
a controlling means for controlling the plurality of light sources,
wherein the information medium further has a visual information layer capable of recording visually identifiable visual information, the visual information layer facing the information layer, and
the controlling means controls the plurality of light sources such that the plurality of light sources emit light simultaneously, when the visual information is recorded onto the visual information layer.

2. An information processing apparatus for performing at least one of a recording operation and a reproduction operation for an information medium having an information layer, the information processing apparatus comprising:
a plurality of light sources;
a convergence lens for converging light emitted from the plurality of light sources onto the information layer of the information medium; and
a controlling means for controlling the plurality of light sources,
wherein the information medium further has a visual information layer capable of recording visually identifiable visual information, the visual information layer facing the information layer, and
the controlling means controls the plurality of light sources such that the plurality of light sources emit light alternately, when the visual information is recorded onto the visual information layer.

3. An information processing apparatus according to any one of claims 1 and 2, wherein:
the plurality of light sources includes a first light source and a second light source, and
the information processing apparatus is configured to satisfy a relationship of D1 ≤ WD < D2, when the visual information is recorded onto the visual information layer,
where WD denotes a distance between the convergence lens and a surface of the visual information layer facing the convergence lens, D1 denotes a distance between the convergence lens and a first converged light spot at which the light from the first light source is converged by the convergence lens such that a light intensity at a center of the converged light becomes maximum, and D2 denotes a distance between the convergence lens and a second converged light spot at which the light from the second light source is converged by the convergence lens such that a light intensity at a center of the converged light becomes maximum.

4. An information processing apparatus according to claim 3 , wherein the information processing apparatus is configured such that the light emitted from the first light source enters the convergence lens as a quasi-parallel light and the light emitted from the second light source enters the convergence lens as a divergent light or a converging light.

5. An information processing apparatus according to claims 1 to 4, wherein:
the plurality of light sources includes a first light source and a second light source, and
the information processing apparatus is configured to satisfy a relationship of NA1 > NA2 and P1 > P2,
where NA1 denotes a numerical aperture of the convergence lens which converges light emitted from the first light source, P1 denotes a power for emitting light from the first light source, NA2 denotes a numerical aperture of the convergence lens which converges light emitted from the second light source and P2 denotes a power for emitting light from the second light source.

6. An information processing apparatus according to any of claims 1 to 5, wherein:
the plurality of light sources includes a first light source and a second light source, and
the information processing apparatus is configured to satisfy a relationship of λ1 < λ2 and P1 > P2,
where λ1 denotes a central wavelength of the first light source, P1 denotes a power for emitting light from the first light source, λ2 denotes a central wavelength of the second light source and P2 denotes a power for emitting light from the second light source.
